# EUROPEAN PATENT APPLICATION

(11) **EP 0 937 378 A2**
(43) Date of publication of application: **25.08.1999**
(21) Application number: 99301107.1
(22) Date of filing: 16.02.1999
(51) Int. Cl.: A01C 3/06

(54) **Spreader vehicle**

(30) Priority: 20.02.1998 GB 9803493
(71) Applicant: HARRY WEST (PREES) LIMITED, Whitchurch Shropshire, SY13 2BT (GB)
(72) Inventor: West, Harry, Whitchurch, Shropshire SY13 2BT (GB)
(74) Representative: Barnfather, Karl Jon, Dr.

(57) **Abstract**

A spreader vehicle, primarily for agricultural use in broadcasting manure, bedding or fodder, as shown in FIGURE 1, has a body (10) with a discharge opening (24), in this example, at the front end of a side wall (22), and powered feed means such as a moving floor conveyor (16) progressively shifting bulk in the body forward. Transfer means having two or more toothed cylinders (32), in this example on vertical axes, are all driven in the same direction and with their teeth (34) coacting, and said means extends across the front wall (20) to act on the leading face of the bulk, fragmenting the material and urging it laterally to reach the opening from where it is propelled outwardly by a distributor cylinder (40).

## Description

This invention relates to spreader vehicles particularly but not exclusively for agricultural use in the transport and broadcast distribution of materials, for example the spreading onto the land of manures of various kinds; and/or the dispensing of feedstuffs, silage, fodder, bedding or like materials to livestock. The vehicle may be self-propelled or. more usually, a trailed vehicle for use with and powered from a tractor.

More specifically the present invention relates to spreader vehicles of the kind having a body or other load container for containing a bulk of material, and power driven feed means acting within the container to progressively transfer the material from one region of the container to another and/or to the exterior of the container e.g. through a discharge opening in wall structure thereof.

Stock husbandry methods involving the penning of cattle in yards or folds produce quantities of compacted straw-based farmyard "muck" which is almost solid, which may be wet and sticky or near dry, and which may be well rotted or with intact fibres such as bedding straw. There are often wide variations in consistency of the "muck" and material of this nature gives rise to handling problems. particularly in ensuring an even spread, avoiding jamming and overstressing of components, and in operating within the available power output from the tractor.

The object of the invention is to provide improvements for rendering said spreader vehicles more efficient and reliable in use.

According to a first aspect of the invention there is provided a spreader vehicle including a body for holding a bulk of material to be spread, and having a discharge opening in a wall thereof; powered distributor means in or immediately outside the opening operating to throw materials fed through the opening clear of the body in a broadcast manner; transfer means within the body including at least two rotors operatively driven in the same direction of rotation about respective spaced axes and each having radially projecting peripheral elements, the envelopes of revolution of the elements of adjacent rotors being in intersecting or coacting relationship, and the direction of rotation of the rotors being such that material acted on thereby is fed towards the discharge opening; and powered feed means within the body for driving the bulk progressively into engagement with the transfer means in use.

Conveniently the rotors are generally cylindrical in shape, of uniform size, and rotate about equally spaced parallel axes.

Preferably said axes are vertical and lie in a common plane spaced parallel to a wall of the body, typically an end wall, so that material acted on by the rotors is fed towards the discharge opening by passing in generally parallel relationship to that wall. The invention also contemplates use of rotors having non-uniform or non-cylindrical envelopes of revolution, e.g. of generally conical or waisted shape and/or rotating about non-parallel spaced axes.

The cylinders or other rotors may all be driven in common at uniform or non-uniform speeds and/or be of different respective diameters so that their peripheral speeds differ from each other.

Conveniently said wall will be the front end wall of the body, the feed means operating to drive the bulk longitudinally forward within the body, and the discharge opening and distributor means being at or near the forward end of a side wall of the body for broadcast distribution laterally of the direction of travel.

The feed means may be a moving floor or moving slatted or chain conveyor in the base of the body. Alternatively a moving wall or other pusher device may be used to drive the bulk.

The transfer means may further include one or more fixed shredding plates arranged radially or tangentially to one or more of the cylinders and having teeth or serrations coating with the peripheral elements thereof to add to the tearing and fragmenting action and/or to control and direct the handling of material by or in the transfer means.

The distributor means conveniently includes a generally cylindrical rotor driven about a horizontal axis and having paddles, tines, and/or beaters or similar rigid or sprung elements of known kind. Such rotor may be driven for overshot or undershot throwing action.

According to a second aspect of the invention there is provided a spreader vehicle including a body for holding a bulk of material and having a discharge opening in a side wall of the body in an end region thereof; powered feed means within the body for driving the bulk progressively longitudinally of the body into said region in use; and powered transfer means in said region including operatively moving elements acting across substantially the width of said region to shift material from the bulk laterally in the direction of the discharge opening.

Preferably the transfer means comprises at least two powered cylindrical rotors all having vertical axes and all rotating in the same direction to pass said material laterally of the body towards the discharge opening.

The peripheries of said rotors may carry radially projecting elements and preferably the envelopes of revolution of elements of adjacent rotors are in intersecting or coacting relationship for stripping accumulations of material from the rotor peripheries.

It is also preferred that the operative direction of rotation is such that the zones of the rotor peripheries which are nearest to the advancing bulk in use are moving in the direction of the discharge opening.

An example of the invention will now be more particularly described with reference to the accompanying drawings wherein:-
FIGURE 1 is a diagrammatic plan view of a spreader vehicle.
FIGURE 2 is a diagrammatic sectional side view thereof, and
FIGURE 3 is a diagrammatic sectional front view thereof.

The spreader vehicle shown is a multi-purpose trailer spreader primarily for agricultural use comprising a load container in the form of a generally rectangular body 10 carried on land wheels 11 to the rear. The front end has a rigid drawbar 12 connected to and supported by a tractor in use and a conventional P.T.O. connection (not shown) is provided for powering the mechanism of the spreader from the tractor in use.

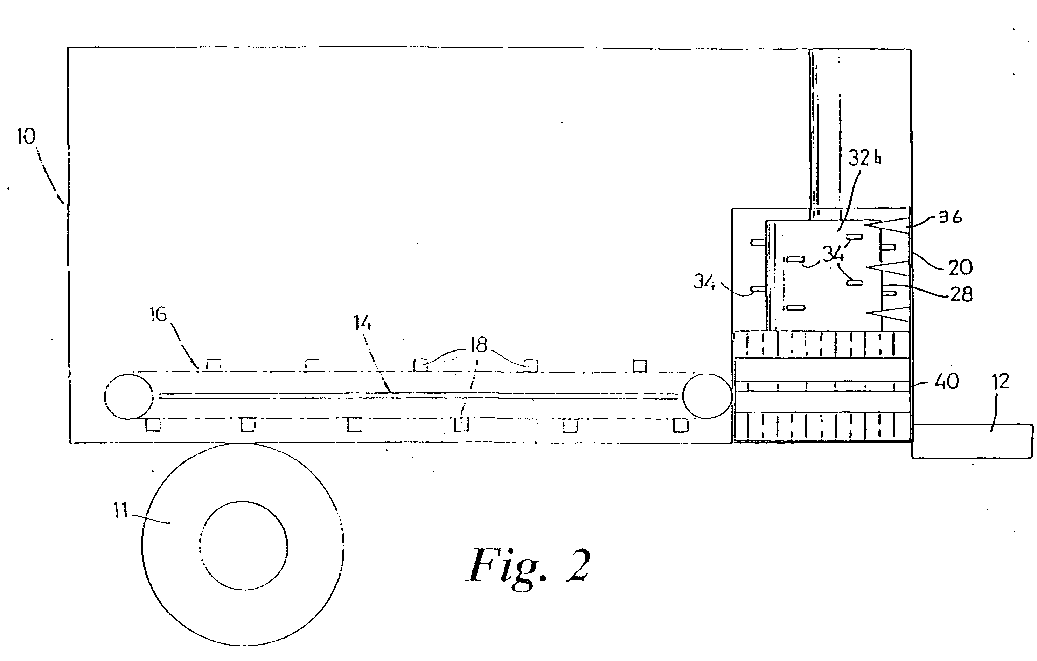

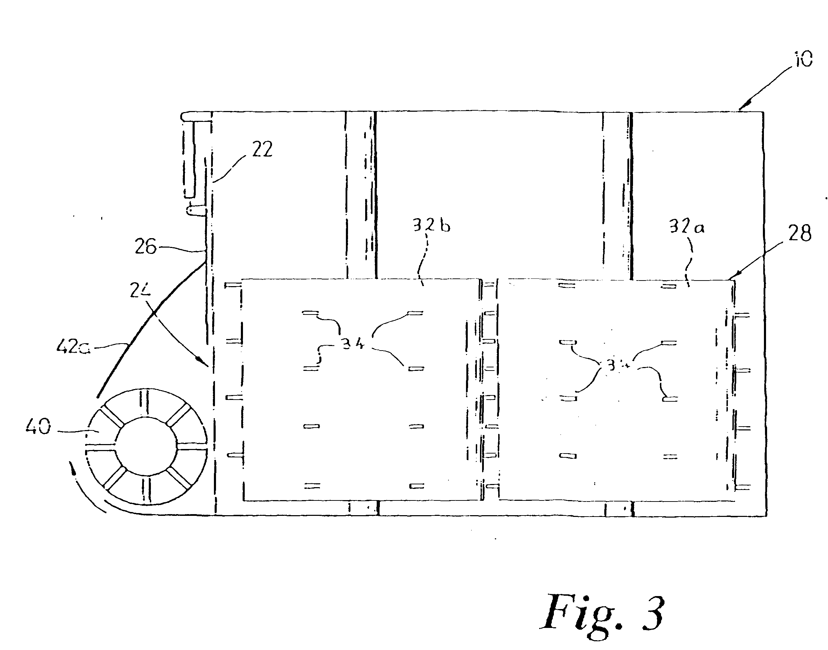

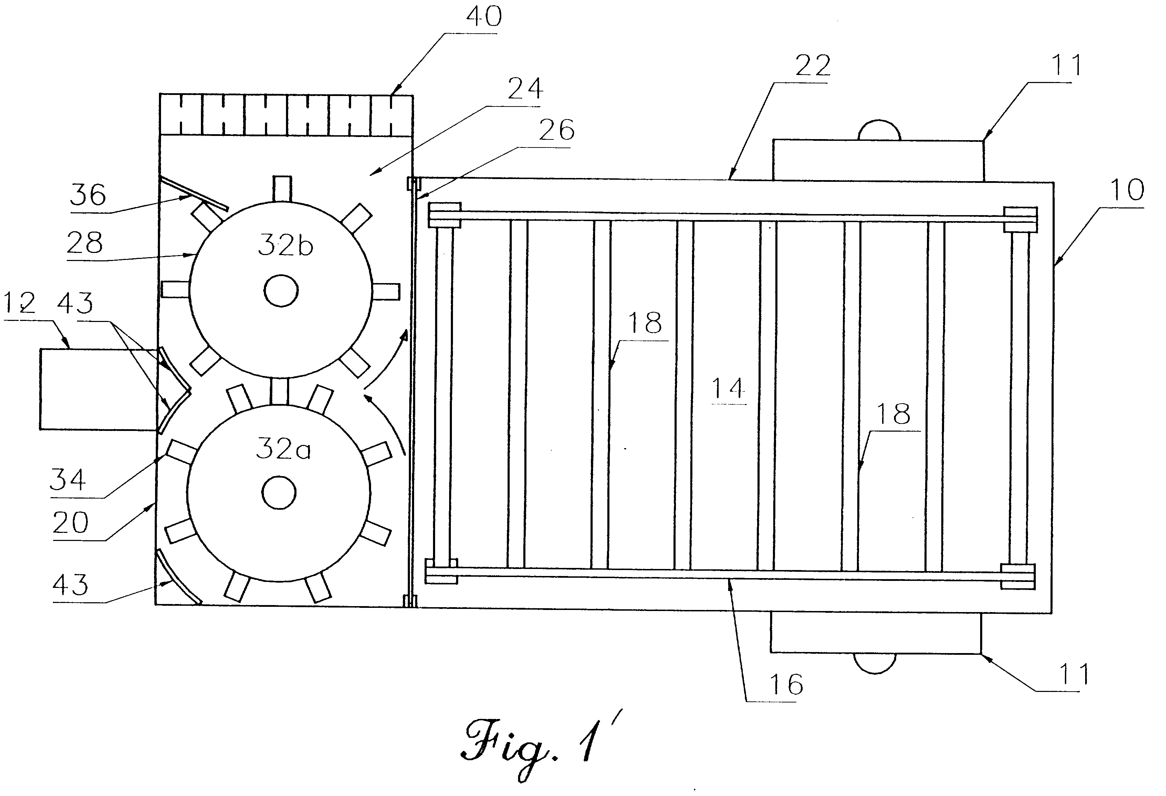

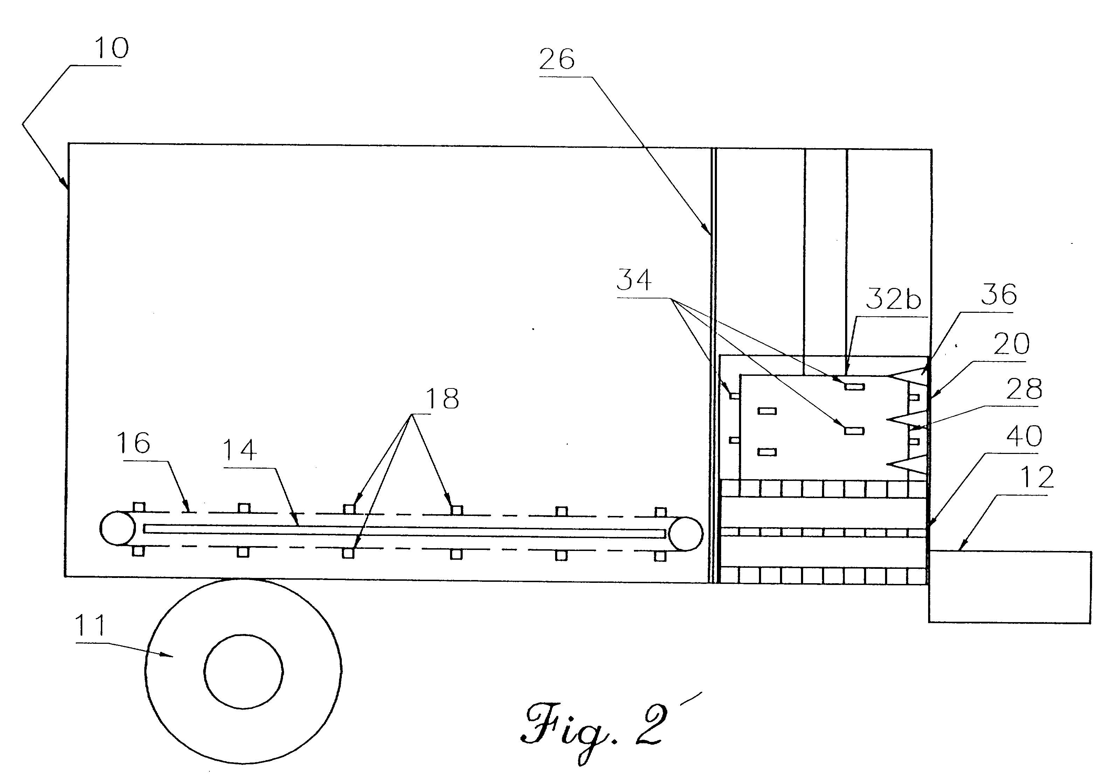

Body 10 has a false floor 14 (Figure 2) overlain by the upper flight of an endless chain conveyor 16 extending longitudinally of the body and having cross slats or scrapers 18. Conveyor 16 is operatively driven through gearing (not shown) from a P.T.O. to progressively drive a bulk of solid or semi-solid material, typically farmyard "muck", towards the front end wall of body 10.

The righthand (viewed in the direction of forward travel) side wall 22 of body 10 defines a discharge opening 24 at its lower front corner and provided with a sliding door 26 sealing the opening for non-spreading transport of the material and for regulating the effective size of the opening during discharge. A vertically sliding door is shown but a horizontally sliding door may be preferred for some applications. Alternatively the discharge opening and door could be in the left hand side wall of body 10 in which case shredding cylinders 32 would be driven in the opposite direction of rotation to that described below.

Transfer means 28 extends within the front end region of the body 10 across the full width thereof and in close spaced proximity to the lower part of end wall 20. The rearward extent of means 28 is approximately co-extensive with that of opening 24 and is closely spaced from the forward end of feed means 16. In the example the effective height of means 28 is somewhat more than half the height of body 10.

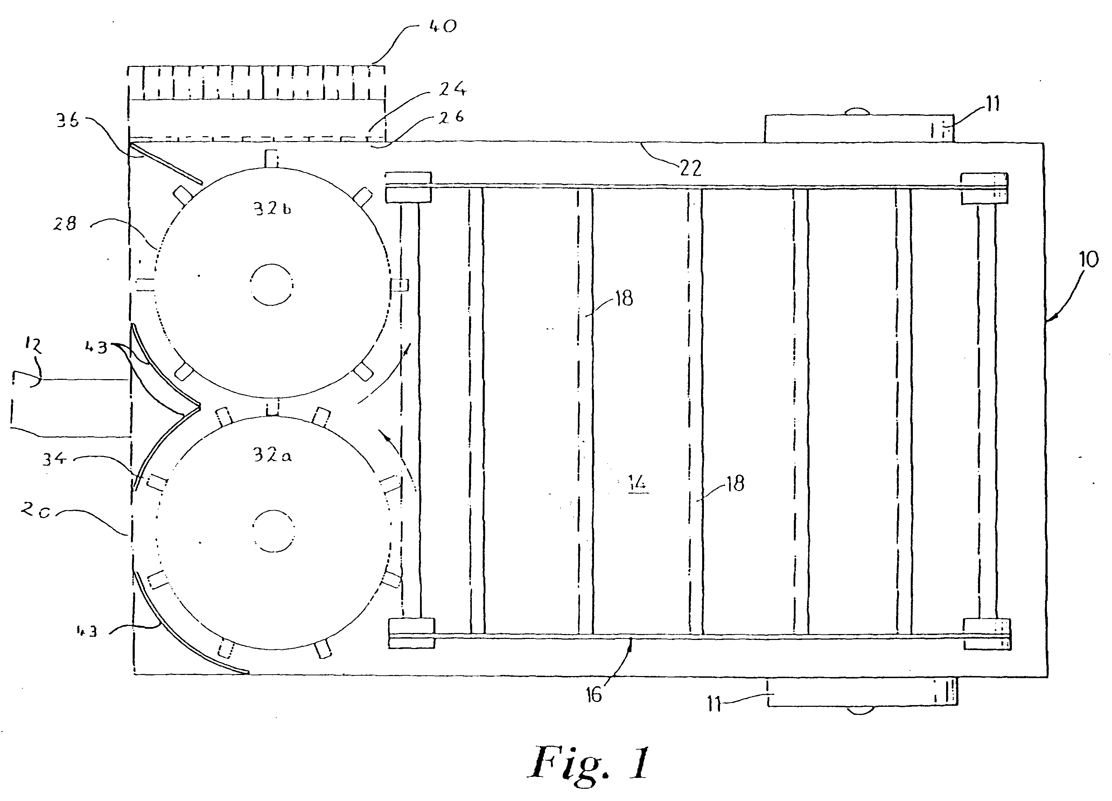

Transfer means 28 comprises a set of in this example two vertical shredding cylinders 32a and b whose spaced vertical axes lie in a common plane spaced rearwardly and in parallel relationship to front wall 20. Cylinders 32 are both driven in the same direction of rotation, anti-clockwise as viewed in Figure 1, from the P.T.O gearing (not shown).

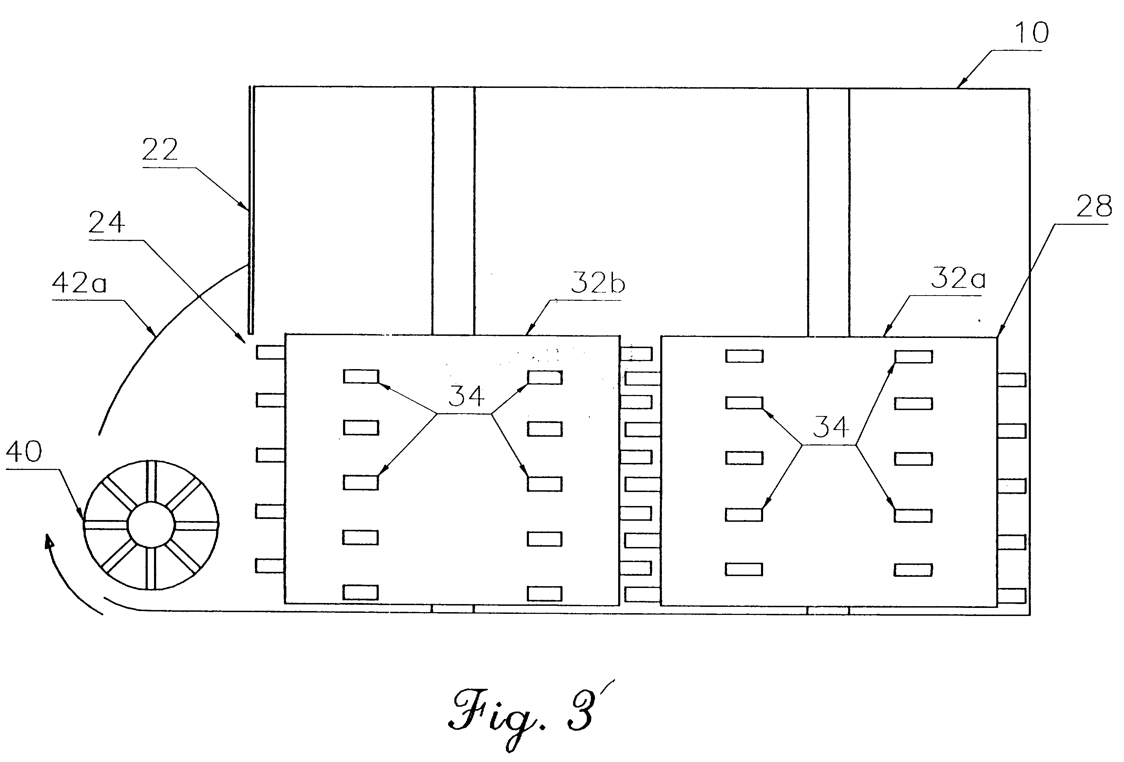

Each cylinder 32 has elements in the form of radially projecting peg-like teeth 34 spaced both angularly and axially about its periphery. The diameter of the cylinders is such that the teeth 34 of adjacent cylinders have envelopes of revolution which intermesh or overlap axially as best seen in Figure 3 so that as the respective sets of teeth pass each other in opposite directions they clear the cylinder peripheries and teeth of adherent material carried round therewith and which would otherwise clog the action of the teeth.

The teeth or other peripheral elements may take various forms such as pointed sprung or other tines, edged blades having a cutting action, or simple pegs or teeth, or some combination of different types of elements on each cylinder. It will also be understood that the disposition and spacing of the elements on the cylinders may be varied to provide the most effective action related to the peripheral speed of the cylinders and the desired throughput of material.

Transfer means 28 may further include one or more fixed shredding plates 36 mounted vertically e.g. in the front right-hand corner of body 10 in radial relationship to cylinder 32b immediately adjacent to discharge opening 24. The edge of plate 36 adjacent to cylinder 32b is toothed, notched or serrated so that it meshes and coacts with the rotating teeth 34 of the respective cylinder as best seen in Figure 2.

Plate 36 contributes to the control and direction of material carried round by the cylinder teeth. Plate 36 will prevent any substantial quantity of material being carried back into the main part of the body 10 by rotation of cylinder 32b, combing material from its teeth for passage through discharge opening 24. A further plate or plates at suitable positions will serve to prevent foreign bodies such as stones being carried round with the teeth of a relative cylinder 32 and may also make some contribution to shredding or fragmenting action of the cylinder teeth e.g. on any material carried round the extreme lefthand side of fragmenting means 28 and/or carried into the space between front wall 20 and cylinder 32.

It will be seen that the material acted on by cylinders 32 as the bulk is fed towards them by the action of the conveyor 16 will be torn free or otherwise separated from the bulk as it is urged to the right until it reaches discharge opening 24. Depending on its consistency some or all of the transferred material may be shredded or fragmented by the action of the transfer means. Passage of material between the cylinders towards front wall 20 is resisted by the intermeshing of the two sets of teeth 34.

Immediately outside and adjacent to the lower edge of opening 24 is a conventional cylindrical powered distributor rotor 40 driven about a horizontal axis, in this example clockwise as seen in Figure 3 so that it sweeps material engaged thereby in an undershot manner round the floor of a shroud 42 to project it in broadcast manner laterally of the forward path of movement of the spreader. A further part 42a (Figure 3) of shroud 42 directs material leaving discharge opening 24 downwardly and outwardly towards rotor 40. The distributor rotor also contribute to the shredding and fragmentation of more solid materials.

As the material reaching rotor 40 has already been largely fragmented and shredded by means 28 the loading on rotor 40 is substantially reduced and the evenness of its broadcast spreading action is much improved with a wide range of materials because there is substantially regular and metered feed of material to it regardless of irregularities of consistency, density etc of the bulk within the body.

For some applications rotor 40 may be driven in the opposite direction to give an overshot action on the material, however, the undershot arrangement described is preferred because this enables the spreader to also handle liquid or semi-liquid materials such as slurry, or a mix of materials such as farmyard "muck" having a slurry content, the liquid flowing by gravity from body 10 through or past means 28 to gather in the lower part of shroud 42 and be projected therefrom by the action of paddles or the like on rotor 40 in known manner. If the liquid content is high or slurry alone is being handled the flow rate will be controlled by positioning door 26.

Filler plates 43 may be provided on front wall 20 to prevent or reduce any build up of material in dead parts of the body in front of cylinders 32.

It will be understood that the number and diameter of cylinders 32 may vary depending on the arrangement and type of spreader required. For some applications three, four or more cylinders might be provided but increasing the number of cylinders means each must be smaller in diameter and driven faster to provide the same peripheral speed, also the drive mechanism must be more complex.

It will also be understood that the discharge opening could be to the rear of one side of body 10 rather than the front although the front arrangement is preferred because it simplifies the transmission of drive to the various powered components of the spreader from the front P.T.O. input.

The spreader may be used for distribution of a wide range of materials. As well as farmyard manure of various consistencies it can be used for distribution of animal fodder or bedding, in particular more or less tightly packed fibrous materials such as in particular silage and baled or compressed hay, straw or other forage.

A modified embodiment of the invention is shown in FIGURES 1¹,2¹,3¹. Parts which are similar to those shown in FIGURES 1 to 3 are provided with the same reference numbers. The spreader vehicle shown in FIGURES 1¹ to 3¹ differs from that shown in FIGURES 1 to 3 in that sliding door 26 has been replaced by the longer door as shown and repositioned substantially at right angles to the position shown in FIGURES 1 to 3 and is now vertically acting and placed between the conveyor 16 and transfer means 28. If preferred, sliding door 26 may be provided in addition to door 26 shown in FIGURES 1 to 3.

Advantageously, providing the wall inside between the floor conveyor and the vertical shredder cylinder with a control door to regulate back before material reaches shredders lightens the loading on start up. Also, importantly, positioning the sliding door 26 in said second position allows power to be reduced throughout the operating cycle because excess material can be kept off the transfer means (the sliding door may be partially opened/closed by a regulated amount). This may be particularly important at low application rates.

It is to be understood that the scope of this invention is not to be unduly limited by the particular choice of terminology and that a specific term may be replaced by any equivalent or generic term. For example, the term "spreader vehicle" could be replaced by "movable container". Further it is to be understood that individual features, method or functions related to the spreader vehicle might be individually patentably inventive. In particular, any disclosure in this specification of a range for a variable or parameter shall be taken to include a disclosure of any selectable or derivable sub-range within that range and shall be taken to include a disclosure of any value for the variable or parameter lying within or at an end of the range. The singular may include the plural or vice versa.

Therefore, further according to the present invention there is provided a spreader vehicle preferably having co-operating rotors preferably driven in the same rotational sense, in use, and co-acting to transfer material such as manure to a discharge opening with powered feed means being provided for moving said material to the transfer means, the envelopes of revolution of the rotors preferably intersecting or co-acting with one another.

Further according to the present invention there is provided a method of spreading material using a vehicle as set out in the immediately preceding paragraph.

Further according to the present invention there is provided any feature or combination of features derivable from this description and/or drawings.

Further according to the present invention there is provided in a spreader vehicle, transfer means for moving material such as manure sideways of the vehicle through a discharge opening. Preferably, a sliding door is provided between the transfer means and powered feed means.

## Claims

1. A spreader vehicle including a body for holding a bulk of material to be spread, and having a discharge opening in a wall thereof; powered distributor means in or immediately outside the opening operating to throw materials fed through the opening clear of the body in a broadcast manner; transfer means within the body including at least two rotors operatively driven in the same direction of rotation about respective spaced axes and each having radially projecting peripheral elements, the envelopes of revolution of the elements of adjacent rotors being in intersecting or coacting relationship, and the direction of rotation of the rotors being such that material acted on thereby is fed towards the discharge opening; and powered feed means within the body for driving the bulk progressively into engagement with the transfer means in use.

2. A vehicle as in claim 1 wherein the rotors are of generally cylindrical shape and/or wherein the rotors are of uniform size and/or wherein the rotors rotate about equally spaced parallel axes.

3. A vehicle as claimed in claim 1 or claim 2 wherein the rotors rotate about vertical axes, which axes lie in a common plane spaced parallel to a wall of the body, the material acted on by the rotors in use being fed towards the discharge opening by passing in generally parallel relationship to said wall.

4. A vehicle as in any preceding claim wherein the rotors are all driven at uniform peripheral speed or alternatively wherein different ones of said rotors are driven at different peripheral speeds and/or wherein the transfer means comprises sufficient rotors of sufficient size to act on the advancing face of the bulk in use substantially across the full horizontal extent of the wall of the body which is in opposing relationship to said bulk face and preferably wherein said rotors are two in number and preferably wherein the transfer means has an effective height of at least half the height of the body, and/or wherein said opposing wall is an end wall of the body, the material acted on by the rotors being fed laterally of the body and the discharge opening being in an adjacent part of a side wall of the body and preferably wherein said end wall is the front end wall of the body and the discharge opening is at or near the forward end of said side wall.

5. A vehicle as in any preceding claim wherein the transfer means further includes one or more shredding plates arranged radially or tangentially to one or more of the rotors and having teeth or serrations coacting with the peripheral elements.

6. A vehicle as in any preceding claim wherein the feed means includes a moving floor or conveyor in the base of the body to carry the bulk towards the transfer means and/or wherein the feed means includes a moving wall or other pusher device for shifting the bulk along the body floor towards the transfer means.

7. A spreader vehicle including a body for holding a bulk of material and having a discharge opening (in a side wall) of the body in an end region thereof; powered feed means within the body for driving the bulk progressively longitudinally or axially of the body into said region in use; and powered transfer means in said region including operatively moving elements acting across substantially the width of said region to shift material from the bulk laterally in the direction of the discharge opening.

8. A spreader vehicle as claimed in claim 7 in which the transfer means comprises at least two powered cylindrical rotors all having vertical axes and all rotating in the same direction to pass said material laterally of the body towards the discharge opening.

9. A spreader vehicle as claimed in claim 8 in which the peripheries of said rotors carry radially projecting elements.

10. A spreader vehicle as claimed in claim 9 in which envelopes of revolution of elements of adjacent rotors are in intersecting or coacting relationship for stripping accumulations of material from the rotor peripheries.

11. A spreader vehicle previously as claimed in claim 8 or claim 9 in which the operative direction of rotation is such that the zones of the rotor peripheries which are nearest to the advancing bulk in use are moving in the direction of the discharge opening.

12. A spreader vehicle as claimed in any one of the preceding claims having a sliding door between the transfer means and the powered feed means.

13. In a spreader vehicle, transfer means for moving material sideways through a discharge opening.

14. In a spreader vehicle, a sliding door positioned in between transfer means and powered feed means.
